(19) Europäisches Patentamt
European Patent Office
Office européen des brevets

(11) Publication number: **0 255 760 B1**

(12) # EUROPEAN PATENT SPECIFICATION

(45) Date of publication of patent specification: **12.06.91**

(51) Int. Cl.5: **B01J 13/02**, B01D 1/18, A01N 25/14

(21) Application number: **87305852.3**

(22) Date of filing: **01.07.87**

(54) **A process for the production of a granule-shaped composition comprising agricultural chemical compound.**

(30) Priority: **02.07.86 JP 154107/86**

(43) Date of publication of application:
**10.02.88 Bulletin 88/06**

(45) Publication of the grant of the patent:
**12.06.91 Bulletin 91/24**

(84) Designated Contracting States:
**AT BE CH DE ES FR GB GR IT LI LU NL SE**

(56) References cited:
**EP-A- 0 014 503**
**FR-A- 2 025 213**
**FR-E- 80 241**
**EP-A- 0 141 509**
**FR-A- 2 030 315**
**GB-A- 2 118 945**

(73) Proprietor: **MEIJI SEIKA KAISHA LTD.**
**4-16 Kyobashi 2-chome**
**Chuo-ku Tokyo 104(JP)**

Proprietor: **Kao Corporation**
**14-10, Nihonbashi Kayabacho 1-chome**
**Chuo-Ku Tokyo 103(JP)**

(72) Inventor: **Kobayashi, Toshiyuki**
**2153-191, Kamariya-cho Kanazawa-ku**
**Yokohama-shi Kanagawa-ken(JP)**
Inventor: **Sunazuka, Kensuke**
**9-3, Sugao Miyamae-ku**
**Kawasaki-shi Kanagawa-ken(JP)**
Inventor: **Sakurai, Shinji**
**1969-33, Kawashima-cho Asahi-ku**
**Yokohama-shi Kanagawa-ken(JP)**
Inventor: **Uomoto, Katsuhito**
**2-195, Tode Honcho Saiwai-ku**
**Kawasaki-shi(JP)**
Inventor: **Watanabe, Suzuo**
**2-15-4, Iwato**
**Yokosuka-shi Kanagawa-ken(JP)**

**EP 0 255 760 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Iwasaki, Tetsuji**
**1247, Saikazaki**
**Wakayama-shi Wakayama-ken(JP)**
Inventor: **Katabe, Kenichi**
**736-17, Sakata**
**Wakayama-shi Wakayama-ken(JP)**
Inventor: **Matsumoto, Tadao**
**2604-130, Hakonoura Hannan-cho**
**Sennangun Osaka-fu(JP)**
Inventor: **Takeda, Nobuo**
**2-6-12, Minamiyama Shiroi-machi**
**Inba-gun Chiba-ken(JP)**

(74) Representative: **Moon, Donald Keith et al**
**BREWER & SON Quality House Quality Court**
**Chancery Lane**
**London WC2A 1HT(GB)**

## Description

This invention relates to a process for the production of a granular composition or formulation containing an agricultural chemical. More particularly, this invention relates to a process for the production of a granule-shaped composition or formulation comprising an agricultural chemical compound as the active ingredient, in association with an effective amount of at least one anionic surface-active agent to act as agent for enhancing the intended useful biological activity of the agricultural chemical compound.

Different kinds of agricultural chemicals, including insecticide, fungicide, bacteriocide, herbicide, acaricide, plant growth regulator, insect attractant, insect repellent and seed disinfectant, have been formulation into and applied in various forms such as concentrated emulsifiable solution, emulsion, wettable powder, flowable powder, grain, granule, water-soluble granule and the like. Among these, the wettable powder and water-soluble granule are found to be advantageous formulations owing to their favorable storage life of the formulation, their low costs of production, their tendency to invoke no or little environmental pollution and their tendency to involve no or little phyto-toxicity to crop plants.

While, in order to ensure that the intended useful biological activity of the agricultural chemical compound present as the principal, active ingredient in the agricultural compositions is allowed to manifest to its full extent, some research and tests have been made about incorporation of various kinds of surface-active agents into the agricultural chemical compositions so that the surface-active agent incorporated can act as agent or adjuvant for enhancing the intended useful biological activity of the agricultural chemical compound as the principal active ingredient of the composition. In recent years, further exploitation of new and practicable agricultural chemical compounds becomes more difficult as a prevailing situation. Accordingly, it is greatly significant that the useful biological activity of the conventional or existing known agricultural chemical compounds can be enhanced by incorporation of a surface-active agent of some selected types into the agricultural chemical compositions.

However, when such wettable powder or water-soluble granule formulation comprising a combination of an agricultural chemical compound as the principal active ingredient and a high proportion of a surface-active agent in its effective and sufficient amount which will permit the surface-active agent to act to enhance or increase the intended useful biological activity of said agricultural chemical compound is to be prepared, it has usually been experienced that the wettable powder product of water-soluble granule product having satisfactory properties cannot be obtained if it is prepared either according to such conventional mix-grind methods where the components of the compositions for formulating the above-mentioned wettable powder or water-soluble granule are mixed and ground together; or according to such known granulation method where the components of the composition are mixed together and granulated by means of a conventional granulator; or according to such known co-current flow spray-drying methods (as disclosed in many literatures, including published European patent application EP-A-141509 and Example 1 of Japanese patent application first publication "Kokai" No. 64904/85).

Published European patent application EP-A-141509 discloses the preparation of water-soluble granules containing the fungicide procymidone as an active ingredient and a water-soluble polymer as a dispersing agent by spray drying an aqueous suspension containing procymidone and the water-soluble polymer. The total content of the active ingredient, water-soluble polymers and filler in the aqueous suspension is 20 to 70% and preferably 30 to 60%. The aqueous suspension is atomized and spray-dried within a co-current flow of hot gas in a co-current spray-drier. The co-current spray-drier has a pressure spray nozzle and the diameter of the nozzle orifice is 0.5 to 3.0 mm. The spraying pressure is in the range 294 to 1960 kPa (3 to 20 $kg/cm^2$) and the drying temperature is not more than 150°c. The procymidone-containing granules prepared using the method disclosed in EP-A-141509 have a particle diameter of about 0.1 to about 1.0 mm and consist of 10 to 95% by weight procymidone and 3 to 90% by weight water-soluble polymer.

Thus, when a wettable powder of a water-soluble granule formulation is intended to be produced by mixing an agricultural chemical compound as the principal active ingredient, and a high proportion of a surface-active agent in its amount effective and sufficient to enhance the useful biological activity of said agricultural chemical compound, with a volume of water and then shaping the resulting aqueous mixture into granules by means of a conventional granulator device, it has always been experienced that there occur some difficulties such that the granulation method can become difficult to be achieved due to excessive foaming of said aqueous mixture, and that the granular products as prepared, even if they can be produced by means of the granulator, as well as the granular products as produced by the co-current flow spray-drying method can show disadvantageous properties such that the cohesiveness of granule or the collapsibility or disintegrability of granule to disperse into water is poor; the solubility of granule into water is poor; the dispersibility of granule into water is poor; and the tendency of granule to drift or generate very much fine dust is undesirably developed.

In an attempt to eliminate the above-mentioned difficulties, we, the present inventors, have made extensive researches. As a result, we have now found that such granular composition or formulation being free from the aforesaid disadvantageous properties but having excellent and satisfactory properties can be prepared even with using an agricultural chemical compound in association with a high proportion of a variety of surface-active agents in an amount effective to enhance the useful biological activity of the agricultural chemical compound, when a concentrated aqueous solution or aqueous slurry containing the agricultural chemical compound and an anionic surface-active agent of some selected types is prepared and then atomized and spray-dried according to a counter-current flow spray-drying technique in the particular manner as described hereinafter and under the particular conditions of operation as described hereinafter. This invention has thus been accomplished.

On the other hand, we have been well aware of that general techniques for the production of solid granules from a variety of materials according to the co-current flow spray-drying method or according to the counter-current flow spray-drying method are described in many literatures, including the "Chemical And Process Engineering Series, Spray Drying" by K. Masters, published from Leonard Hill Books London, An Intertext Publisher (1972), for example. According to this invention there is a process for the production of a granule-shaped composition including an agricultural chemical compound characterised by drying in a reactor a concentrated aqueous solution or an aqueous slurry, including the agricultural chemical compound as an active ingredient, at least one anionic surface-active agent and, optionally, one or more additives depending on the form or type of composition to be produced, the weight ratio of agricultural chemical compound to anionic surface-active agent being in the range 1:0.5 to 1:20, the anionic surface-active agent being a sulphate type, sulphonate type, phosphate type or a carboxylic acid type, the drying being effected by spraying into an upper part or top of the reactor at a pressure of between 490kPa (5 $kg/cm^2$) and 24500 kPa (250 $kg/cm^2$) the concentrated aqueous solution or aqueous slurry through spraying means having an outlet orifice with a diameter in the range of 0.4 mm to 2.0 mm into an upward and continuously-flowing gas stream whose temperature at its inlet is in the range l50 °C to 300 °C the gas stream being continuously withdrawn from the upper part or top of the reactor and, by controlling the rate of supply of gas and the rate of spraying of solution or slurry the gas temperature is in the range 60 °C to l20 °C at its coolest portion, so that dried, non-sticky solid particles are formed having a substantially hollow interior, the particles comprising the agricultural chemical compound, at least one of the anionic surface-active agents and, optionally, one or more additives, and said particles are removed from the reactor.

In a more specific embodiment, there is provided a process for the production of a granule-shaped composition comprising an agricultural chemical compound and an effective amount of at least one anionic surface-active agent to enhance the biological activity of the agricultural chemical compound, said granule-shaped composition having high free-flowing property, favorable cohesiveness, favorable collapsibility and favorable solubility or dispersibility in water and low tendency to drift in air, which process comprises (i) spray-drying a concentrated aqueous solution or an aqueous slurry containing (a) the agricultural chemical compound as the active ingredient of the granule-shaped composition to be produced, (b) one or more of anionic surface-active agents of the sulfate type, the sulfonate type, the phosphate type or the carboxylic acid type, and (c) one or more of optional additives or vehicle which may, if desired, be incorporated into the composition optionally depending on the form or type of the composition to be produced; and containing said agricultural chemical compound as the active ingredient and said anionic surface-active agent in the aqueous solution or slurry at a ratio of the amount of (a) the agricultural chemical compound to the amount of (b) the anionic surface-active agent in a range of l:0.5 to l:20 by weight, according to counter-current flow spray-drying method, in a tower chamber fitted with inlets for supply of a hot gas positioned in the lower part of the tower chamber, fitted with outlets for effecting withdrawal of the gas leaving the tower chamber and positioned in the upper part or in the top of the tower chamber, fitted with a spray nozzle having an outlet orifice of 0.5-4.0 mm in diameter, for spraying a liquid fluid into the tower chamber and positioned in the upper part or in the top of the tower chamber and also fitted with an outlet positioned in the bottom of the tower chamber and for removal of the dried granule product having fallen through the middle part and the lower part of said tower chamber down to and having accumulated on and above the bottom of said tower chamber, wherein the counter-current flow spray-drying step of said aqueous solution or slurry is conducted in such manner that a hot gas is continuously passed into the tower chamber through said inlets for supply of the hot gas, to form a continuous and upwards-flowing stream of the hot gas in the middle part and the upper part of the tower chamber, while the gas stream is continuously withdrawn out of the tower chamber through said outlets for withdrawal of the gas at the upper part or the top of the tower chamber, and that the concentrated aqueous solution or slurry to be spray-dried is fed into said spray nozzle in the tower chamber and continuously atomized by being sprayed out through the outlet orifice of the spray nozzle downwards into within the upwards-flowing stream of the hot gas in the upper part of the

tower chamber, under a spraying pressure of 490 to 24500 kPa (5 to 250 $Kg/cm^2$) as measured at the back end orifice of the spray nozzle at which the concentrated aqueous solution or slurry is passed into the nozzle, whereby numerous fine liquid droplets of said aqueous solution or slurry as atomized are formed within the upwards-flowing hot gas stream; and in such manner that the fine liquid droplets so formed are allowed to fall down at low speed within the upwards-flowing stream of the hot gas continuously ascending through the tower chamber, and thus the falling fine liquid droplets are each heated by the upwards-flowing hot gas to evaporate a part of the water content off out of the liquid droplets and to form the liquid droplets of which the outer surfaces have been dried and shrinked and of which the particle size has been decreased less than the initial particle size of the liquid droplets just after the atomization, and also in such manner that the liquid droplets having the so dried and shrinked surfaces are further allowed to continue to fall down within the upwards-flowing stream of the hot gas and to be further heated and undergo further evaporation of the water content out of the falling liquid droplets, until an interior hollow space is formed in each of the falling droplets and the falling droplets have all been dried completely to form such inflated, dried and non-sticky solid granules each having an interior hallow space and having a particle size larger than that of the liquid droplets as initially atomized, while such inflated and dried solid granules so formed are further falling down within the upwards-flowing stream of the hot gas; and wherein the counter-current flow spray-drying step of said aqueous solution or slurry is conducted under such conditions that the inlet temperature of the supplied hot gas as measured at the inlet orifice for supply of the hot gas into the lower part of the tower chamber is kept in a range of l50°C to 300°C and that the rate of the supply of the hot gas from the inlet for supply of the hot gas into the tower chamber and the rate of the spraying of the aqueous solution or slurry from the spray nozzle are so controlled mutually with each other that the outlet temperature of the leaving gas as withdrawn from the upper part or the top of the tower chamber is kept in a range of 60°C to l20°C, and (ii) allowing the resulting dried and non-sticky solid granules to come towards the bottom of the tower chamber and accumulate on and above the bottom of the tower chamber, and (iii) discharging out the so accumulated and dried solid granules composed of the agricultural chemical compound, the anionic surface-active agent and the optional additive or vehicle, through said outlet for removal of the dried granule product at the bottom of the tower chamber.

The agricultural chemical compound present as the principal active ingredient in the granular composition or formulation as produced according to the process of this invention may be any compound which has a biological activity useful as an insecticide, fungicide, bacteriocide, herbicide, acaricide, plant growth regulator, insect attractant, insect repellent, seed disinfectant, and other known agricultural chemicals.

In the process of this invention, the concentrated aqueous solution or aqueous slurry to be spray-dried may contain (a) an agricultural chemical compound at a concentration of l0 to 60% by weight of said chemical compound, (b) an anionic surface-active agent at a concentration of 5 to 60% by weight of this agent and (c) a finely divided water-insoluble solid vehicle at a concentration of 2 to 60% by weight of this vehicle; or a water-soluble extender at a concentration of 2 to 60% by weight of this extender as the optional additive, as well as water as the balance, and the total concentration of the agricultural chemical compound, the anionic surface-active agent and the optional additive in said aqueous solution or aqueous slurry may be in a range of l0 to 80% by weight based on the weight of the aqueous solution or slurry, and the ratio of the amount (or the concentration) of the agricultural chemical compound to the amount (or the concentration) of the anionic surface-active agent may be in a range of l:0.5 to l:20 by weight.

If desired, the aqueous solution or slurry to be spray-dried may further contain, as one of the optional additives (c), a non-ionic surface-active agent of polyoxyalkylene derivative type for the purpose as explained hereinafter, as long as the total concentration of the active ingredient (a), the surface-active agent (b) and the additives (c) is in the range of l0-80% by weight of the solution or slurry.

The following are exemplary of the known anionic surface-active agents to be used as the ingredient (b) present in the concentrated aqueous solution or slurry to be spray-dried:

(i) Sulfate type
($C_{8-22}$)-Alkyl sulfates;
Polyoxyalkylene ($C_{8-22}$)-alkyl ether sulfates;
Polyoxyalkylene ($C_{4-11}$)-alkyl aryl ether sulfates; and
Polyoxyalkylene styrenated phenol ether sulfates.
(ii) Sulfonate type
($C_{4-16}$)-Alkyl benzene sulfonates;
Salts of dialkyl sulfosuccinates;
($C_{4-16}$)-Alkyl diphenyl ether sulfonates; and
Alpha-($C_{8-12}$)-olefin sulfonates.
(iii) Phosphate type

($C_{8-22}$)-Alkyl phosphates;
Polyoxyalkylene ($C_{8-22}$)-alkyl phosphates; and
Polyoxyalkylene ($C_{4-16}$)-alkyl phenyl ether phosphates.
(iv) Carboxylic acid type
Potassium oleate;
Potassium soap of partially hydrogenated beef tallow fatty acids;
Sodium stearate; and
Sodium soap of mixed fatty acids.

Among those surface-active agents exemplified above are preferred the alkyl sulfates, polyoxyalkylene alkyl ether sulfates, alkyl phosphates and polyoxyalkylene alkyl phosphates.

A great variety of agricultural chemical compound may be used as the active ingredient (a) in the concentrated aqueous solution or slurry according to this invention. Thus, examples of suitable insecticides include the following:

(i) Pyrethroids such as fenvalerate [α-cyano-3-phenoxybenzyl 2-(4-chlorophenyl)-3-methylvalerate] and bithroid [α-cyano-(4-fluoro-3-phenoxy)phenylmethyl 3-(2,2-dichloroethenyl)-2,2-dimethylcyclopropane carboxylate];

(ii) Organophosphorus compounds such as DDVP (2,2-dichlorovinyl dimethyl phosphate), Sumithion (dimethyl 4-nitro-m-tolyl phosphorothionate), Malathion (S-[l,2-bis (ethoxycarbonyl)ethyl]-dimethylphosphorothiolthionate), Dimethoate (dimethyl S-(N-methylcarbamoylmethyl)-phosphorothiolthionate), Elsan (S-[α-(ethoxycarbonyl)benzyl]dimethylphosphorothiolthionate) and Baycid (O,O-dimethyl-O-3-methyl-4-methylmercaptophenyl thiophosphate),

(iii) Carbamates such as Bassa (o-butylphenylmethyl carbamate), MTMC (m-tolylmethyl carbamate), Meobal (3,4-dimethylphenyl-N-methyl carbamate and NAC (l-naphthyl-N-methyl carbamate).

(iv) Others such as Methomyl (methyl N-[(methylcarbamoyl) oxy] thioacetimide) and Cartap (l,3-bis-(carbamoylthio)-2-(N,N-dimethylamino)-propane hydrochloride).

Examples of suitable acaricides or miticides may include Smite (2-[2-(p-tert-butylphenoxy) isopropoxy] isopropyl-2-chloroethylsulfide), Acricid (2,4-dinitro-6-sec-butylphenyldimethylacrylate), Chlormite (isopropyl-4,4-dichlorobenzilate), Akar (ethyl-4,4-dichlorobenzilate), Kelthane (l,l-bis(p-chlorophenyl)-2,2,2-trichloroethanol), Citrazon (ethyl o-benzoyl-3-chloro-2,6-dimethoxybenzohydroximate), Plictran (tricyclohexyltin hydroxide) and Omite (2-(p-tert-butylphenoxy)-cyclobexyl-2-propylsulfite).

As examples of fungicides, there may be enumerated organo-sulfur compounds such as Dithane [zinc ethlenebis (dithiocarbamate)], Maneb [manganese ethylenebis (dithiocarbamate)] and Thiram [bis-(dimethylthiocarbamoyl)disulfide] and various other compounds such as Benlate (methyl l-(butylcarbamoyl)-2-benzimidazolcarbamate), Difolantan (N-tetrachloroethylthio-4-cyclohexan-l,2-dicarboximide), Daconil (tetrachloro-isophthalonitrile), Pansoil (5-ethoxy-3-trichloromethyl-l,2-4-triadizole), Thiophanate methyl [l,2-bis(3-methoxycarbonyl-2-thioureido)benzene], Rabcide (4,5,6,7-tetrachlorophthalide); Kitazin-P (O,O-disopropyl-S-benzylphosphorothioate); Hinosan (O-ethyl-S,S-diphenyldithiophosphate) and Probenazole (3-alloyloxy-1,2-benzothiazol-l,l-dioxide).

As examples of herbicides, there may be mentioned Stam (3,4-dichloropropioanilide), Saturn [S-(4-chlorobenzyl)-N,N-diethylthiol carbamate], Lasso˙ [2-chloro-2′,6′-diethyl-N-(methoxymethyl)acetanilide], glyphosate [N-(phosphonomethyl)glycine isopropylamine salt],DCMU [3-(3,4-dichlorophenyl)-l,l-dimethylurea], Gramoxone (l,l′-dimethyl-4,4′-dipyridinium dichloride), gluphosinate [ammonium DL-homoalanin-4-yl(methyl)phosphinate], ammonium L-homo-alanine-4-yl(methyl)phosphinate, and Bialaphos [L-2-amino-4[(hydroxy)(methyl)phosphinoyl]butyryl-L-alanyl-L-alanine or sodium salt thereof].

Examples of plant growth regulating agents may include MH (maleic hydrazide), Esrel (2-chloroethyl phosphonic acid) and the like.

In cases where the granular composition of agricultural chemical compound to be produced by the process of this invention are in the form of wettable powder or fine granules, finely-divided water-insoluble solid vehicle comprising one or more powdery mineral materials as the additive (c) may optionally be incorporated into the aqueous concentrated solution or aqueous slurry containing the agricultural chemical compound, and the amount of said vehicle may be an amount of up to 60% by weight, preferably in a range of 2-50% by weight, based on the wettable powder product. Exemplary of the powdery mineral materials used as the vehicle additive (c) are pyrophyllite, talc, silica, kaolin, calcium carbonate, bentonite, powdered siliceous rock, powdered limestone, acid clay, powdery diatomaceous earth, gypsom, pumice powder, shell powder, mica powder, colloidal hydrated sodium silicate and the like.

For the production of the granular composition in the form of a wettable powder, a dispersing agent may be added as the additive (c) to the aqueous concentrated solution or aqueous slurry as above-mentioned. The amount of such dispersing agent to be incorporated may be up to 50% by weight,

preferably in a range of 4-40% by weight, based on the wettable powder product.

The dispersing agent may serve to assist the collapse or disintegration of the granules to disperse into water, and the formation of a stable dispersion in water, of the particles of said wettable powder product when the product is mixed with water. To this end, the dispersing agent to be used may be selected, typically from the following classes (l)-(3):

(l) Water-soluble or water-dispersible polymers essentially consisting of one or more monomers selected from unsaturated carboxylic acids and their derivatives.

Typical examples of monomers from which polymers (1) above are derived include unsaturated monocarboxylic acids such as acrylic and methacrylic acids; unsaturated dicarboxylic acids such as maleic acid; derivatives of unsaturated mono- and di-carboxylic acids, for example, alkyl esters (e.g. methyl ester), alkali metal salt (e.g. sodium salt), ammonium salt and organic amine salts (e.g. triethanolamine salt) of those acids and mixtures thereof. In addition to these monomers, comonomers such as vinyl acetate, isobutyrene, diisobutyrene and styrene may be added as copolymerizable ingredient or ingredients.

The polymerization or copolymerization of these monomers may be effected by any of known processes. The proportions of monomers to be used and the degree of polymerization to be achieved are not specially limited so far as the polymers formed are soluble or dispersible in water.

As typical examples of polymers (1) above, there may be enumerated acrylic acid polymers, methacrylic acid polymers, acrylic and methacrylic acids copolymers, acrylic acid-methyl acrylate copolymers, acrylic acid-vinyl acetate copolymers, acrylic acid-maleic acid copolymers, maleic acid-isobutyrene copolymers, maleic acid-styrene copolymers and their salts with an alkali metal, ammonia and an organic amine. Mixtures of two or more of these polymers may also be used.

(2) Water-soluble or water-dispersible polymers essentially consisting of a styrene sulfonic acid salt as the monomeric units.

Homopolymers of styrene sulfonic acid salts may easily be prepared by polymerizing a styrene sulfonic acid salt or by sulfonating polystyrenes. Homopolymers of styrene sulfonic acid salts have the following structure:

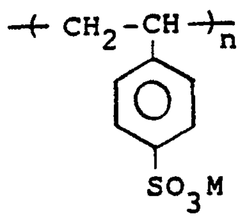

where M represents an alkali metal such as Li, Na and K $NH_4$, an alkyl amine or an alkanol amine. The molecular weight of these homopolymers may generally be above l000, preferably in a range of about l0,000-3,000,000.

Polymers (2) above may also be copolymers of a styrene sulfonic acid salt with a comonomer or comonomers. Such polymers may be prepared easily by copolymerizing a styrene sulfonic acid salt with a comonomer or comonomers or by sulfonating copolymers of styrene - a comonomer or comonomers in a known manner. As comonomers usable for this purpose, there may be used a hydrophobic monomer such as an alkyl acrylate, an alkyl methacrylate, a vinyl alkyl ether, vinyl acetate, ethylene, propylene, butyrene, butadiene, diisobutyrene, vinyl chloride, vinylidene chloride, acrylonitrile and styrene; and a hydrophilic monomer such as acrylic acid, methacrylic acid, maleic acid, fumaric acid, maleic anhydride, vinyl alcohol, acrylamide, methacrylamide, diacetone acrylamide, N-vinylpyrrolidone, 2-acrylamido-2-methylpropane sulfonic acid and methallyl sulfonic acid. A preferred copolymer is (meth)acrylic acid - styrene sulfonic acid copolymer salt. The molar ratio of (meth)acrylic acid to styrene sulfonic acid in the copolymer above is in the range of l:l0 to l0:l, preferably l:3 to 7:l. The average molecular weight of said copolymer may generally be in the range of l,000-l,000,000, preferably l0,000-700,000. Examples of salts of said copolymer include sodium, potassium, ammonium, diethanolamine, triethanolamine, monoisopropanolamine, diisopropanolamine, triisopropanolamine and 2-amino-2-methylpropane-l,3-diol salts. These salts may be those incompletely neutralized, if desired, so long as they do not affect the performance of dispersing agent

used.

(3) Water-soluble formaldehyde condensates of sulfonated aromatic compounds, unsubstituted or substituted with one or more hydrocarbon groups, and salts thereof.

Particularly, formaldehyde condensates of petroleum sulfonic acid derivatives, lignin sulfonic acid derivatives, naphthalene sulfonic acid derivatives, alkylbenzene sulfonic acid derivatives and the like are exemplified.

Formaldehyde condensates (3) above to be used as the dispersing agent according to this invention may be prepared, for example, by sulfonating e.g. naphthalene, alkyl-substituted benzene, alkyl-substituted naphthalene, anthracene, alkyl-substituted anthracene, lignin or aromatic-rich fraction of petroleum residuum in a conventional method, followed by salt-forming reaction of the sulfonated product and then by condensation reaction with formaldehyde. In the last-mentioned step, the degree of condensation is preferably 2-30 and more preferably 3-l0. Where the condensation degree is less than 20, the effect brought about by such condensation is insignificant, whereas the condensation degree is higher than 30, the molecular weight of the resulting polymer becomes too high, with trouble or difficulty in practice possibly due to undesirable decrease in their water-solubility.

A variety of aromatic compounds may be used for the preparation of the formaldehyde condensates (3) above, among which lignin, xylene, toluene, naphthalene, alkylnaphthalenes having l-6 carbon atoms in the alkyl moiety and mixtures thereof may preferably be used. The salts of said formaldehyde condensates may include those of an alkali metal such as sodium and potassium, an alkaline earth metal such as calcium, ammonium and an amine.

As the additive (c) to be optionally incorporated into the aqueous concentrated solution or aqueous slurry of an agricultural chemical compound to be sprayed according to the process of this invention, one or more of the nonionic surface-active agents of polyoxyalkylene derivative type (d) may additionally be used for the purpose of further enhancing the useful biological activity of the agricultural chemicals intended.

To this end, the proportion of such nonionic surface-active agent of polyoxyalkylene derivative type (d) based on the agricultural chemical active ingredient (a), when expressed as weight ratio of (a):(d), may preferably be in a range of l:0.l to l:20, more preferably in a range of l:0.5-l:l0.

The relative proportions of the anionic surface-active agent (b) to the nonionic surface-active agent of polyoxyalkylene derivative type, when expressed as weight ratio of (b):(d), may preferably be in a range of l:4-l:0.25, more preferably in a range of l:3-l:0.33.

Illustrative examples of the nonionic surface-active agents of polyoxyalkylene derivative type (d) are the following:

(l) Polyoxyalkylene ($C_{8-22}$)-alkyl ethers;
(2) Polyoxyalkylene ($C_{4-16}$)-alkyl aryl ethers;
(3) Polyoxyalkylene aryl ethers;
(4) Polyoxyalkylene ($C_{8-22}$)-alkyl esters;
(5) Polyoxyalkylene ($C_{8-22}$)-alkylsorbitan esters;
(6) Polyoxyalkylene ($C_{8-22}$)-alkylsorbitol esters;
(7) Polyoxyalkylene ($C_{8-22}$)-alkylglycerol esters;
(8) Polyoxyalkylene block-polymers;
(9) Polyoxyalkylene block-polymers alkylglycerol esters.

In cases where the granular compositions of agricultural chemical compound are in the form of water-soluble solid granular formulations, namely a water-soluble granule, the additive (c) to be incorporated into an aqueous concentrated solution or slurry which is a starting material to be spray-dried may include water-soluble extender comprising one or more of water-soluble inorganic materials such as Glauber's salt, i.e. sodium sulfate decahydrate, ammonium sulfate, sodium chloride, etc. and water-soluble organic materials such as saccharide or sugars, urea, and the like. Besides, the additive (c) may further include any of those conventionally used as usual additives for the production of agricultural chemical formulations, with reference to the design and composition of the particular preparation intended, but on condition that the function and effect of this invention are not adversely affected.

The total concentration of the ingredients (a) to (c), that is, the total concentration of the active ingredient agricultural chemical compound (a), the anionic surface-active agent (b) and the optional additive (c) is usually in a range of l0-80% by weight, preferably in a range of 30-70% by weight, based on the aqueous concentrated solution or aqueous slurry to be atomized as a spray in the process of this invention, the balance being water.

The tower chamber used in the process of this invention acts as a spray-drying chamber where the

concentrated aqueous solution or aqueous slurry to be spray-dried is injected through the spray nozzle thereinto and atomized therein. In general, the tower chamber used in the present process may be designed to have such a structure similar to those structures of conventional counter-current flow spray-drying towers as illustrated e.g. on page l7 and 75 of the above-mentioned literature "Chemical and Process Engineering Series, Spray Drying" by K. Masters. The tower chamber may preferably be arranged with its central axis being vertical, but it is possible that the tower chamber is arranged with its central axis being inclined more or less to the vertical line. The tower chamber may preferably have a horizontal cross-section which is circular or elliptical. However, the horizontal cross-section of the tower chamber may possibly have a square shape or a polygonal shape. The spray-drying tower chamber used in the present process may preferably have such construction that the upper part, the middle part and the lower part of the tower chamber are cylindrical, the top part of the tower chamber is conical and the bottom part of the tower chamber is in the form of inverted cone. The inlets for supply of the drying hot gas may be provided as a plurarity of openings which are arranged at equal intervals in the circumferential wall of the lower part of the cylindrical body of the tower, and these openings are communicated with a duct for supply of the hot gas so that the hot gas as introduced into the tower chamber via the openings from said duct can be supplied at an equal or substantially equal rate into the tower chamber. It is convenient that the outlet for withdrawal of the gas leaving the tower chamber is located at the apex of the conical top part of the tower. The spray nozzle for atomization of the concentrated aqueous solution or slurry may be provided in an appropriate position in the top part or in the upper part of the tower chamber or in the vicinity of the top of the tower chamber. The dried granular product of the agricultural chemical composition which has been produced by the spray-drying process in the tower chamber may conveniently be discharged out from such outlet for removal of the dried granular product, which is provided at the apex of the inverted cone-shaped bottom of the tower chamber.

In the process of this invention, the fine liquid droplets of the concentrated aqueous solution or aqueous slurry containing the agricultural chemical compound which have been formed by spraying out and atomizing said aqueous solution or aqueous slurry through the spray nozzle into the upper part of the tower chamber are allowed to fall down at a low speed within the continuous and upwards-flowing stream of the drying hot gas passing through the middle part and the upper part of the tower chamber, and during this slow falling down of the liquid droplets, these droplets are heated by the drying hot gas, so that a part of the water content is evaporated off from the liquid droplets and the outer surfaces of the droplets are dried and shrinked to form the liquid droplets having a decreased particle size, owing to that each liquid droplet has reduced its volume or dimensions by the amount of the water as evaporated off from the liquid droplet. As the liquid droplets so partially dried and having the decreased particle size fall down further into a much lower part of the tower chamber, these liquid droplets are brought into contact with the stream of the drying hot gas having a much higher temperature than that of the drying hot gas stream which is passing through the much upper part of the tower chamber, so that the liquid droplets can be heated much stronger in the much lower part of the tower chamber than in the much upper part of the tower chamber. During this time, further parts of the water content can be evaporated off out of the central region of each liquid droplet and a substantial hollow space is formed in the central interior of each liquid droplet, and each droplet is then inflated or increased in its external volume due to the thermoplastic nature of the anionic surface-active agent present in the droplet as well as due to the accompanying thermal expansion of the body of the individual droplets. During the formation of the internal hollow space in each droplet and the inflation of the individual droplets, the liquid droplets can further be dehydrated, to form completely dried and non-sticky solid particles containing a substantially hollow space therein and having a particle size larger than that of the liquid droplet as initially formed just after the atomization of the concentrated aqueous solution or aqueous slurry containing the agricultural chemical.

In the process of this invention, the liquid droplets or particles to be dried are resident in the upwards-flowing stream of the drying hot gas with continuing to fall down and floating within the stream of the drying hot gas, and the total residence time of these liquid droplets or particles falling in the drying gas stream is longer, as compared to the case when the liquid droplets are spray-dried according to the co-current flow spray-drying method where the stream of the drying hot gas is to be passed in the co-current flow direction, that is, in the same direction and sense as that of the falling down of the liquid droplet as atomized. Furthermore, in the present process, as the liquid droplet or particles to be dried are falling down further, they can be brought into contact with the drying hot gas having a much higher temperature. Then the thermoplastic nature of the anionic surface-active agent present in its high proportion in the material of the particles to be dried can be developed. Accordingly, further parts of the water content can readily be evaporated off out of the central interior of the individual liquid droplets or particles to be dried, so that a substantial hollow space is formed in each droplet or particle and the body of each droplet or particle is

inflated or increased in its external volume. In consequence, the inflated and completely dried solid particles so ultimately obtained have gained such structure that a hollow space or cavity is favorably formed in the interior of each dried particle.

As the drying hot gas which is supplied into the spray-drying tower chamber in the process of this invention, may be used any inactive gas such as air, nitrogen, carbon dioxide gas and the like. Hot combustion gases which are produced by combustion of various kinds of fuels such as gaseous hydrocarbons and liquid hydrocarbons may be used for the drying hot gas, too.

The dried granular product which is produced by the spray-drying process and just having accumulated on and above the bottom of the tower chamber can be discharged out of the tower chamber either continuously or successively or batchwise, through the outlet for removal of the granule product which is provided in the bottom of the tower chamber.

In the process of this invention, it is important and necessary that the stream of the drying hot gas is caused to go on upwards substantially in the counter-current direction to the direction in which the sprayed liquid droplets of the concentrated aqueous solution or aqueous slurry of the agricultural chemical as injected from and atomized by the spray nozzle are initially advancing from said spray nozzle. In other words, it is most important in this invention that the spray-drying step is conducted in accordance with the counter-current flow spray-drying method, in order to ensure that the dried granular product shows the desired shape and the desired properties as the granule-shaped composition of the agricultural chemical to be produced by the process of this invention. Besides, it is also important that the requirements or conditions for the diameter of the outlet orifice of the spray nozzle, the spraying pressure as applied on the concentrated aqueous solution or aqueous slurry to be fed into the spray nozzle and measured at the back end orifice of the spray nozzle, the inlet temperature of the drying hot gas as supplied into the tower chamber and the outlet temperature of the leaving gas as withdrawn at the top of the tower chamber are fulfiled in their respective ranges stipulated in accordance with this invention.

In the process of the invention, the diameter of the outlet orifice of the spray nozzle is necessarily in the range of 0.5 to 4.0 mm and may preferably be in a range of 0.6 to 3.8 mm. The spraying pressure (as measured at the back end orifice of the spray nozzle) is necessarily in the range of 490 to 24500 kPa (5 to 250 $Kg/cm^2$) and may preferably be in a range of 589 to 17700 kPa (6 to 180 $Kg/cm^2$). The inlet temperature of the drying hot gas is necessarily in the range of 150° C to 300° C and may preferably be in a range of 170° C to 280° C. The outlet temperature of the leaving gas withdrawn from the tower chamber is necessarily in the range of 60° C to 120° C and may preferably be in a range of 70° C to 110° C.

In the process of this invention, the atomization of the aqueous solution or slurry containing the agricultural chemical compound is effected by means of a spray nozzle under pressure. The particle size of the fine liquid droplets as formed by the atomization may vary depending on values of the diameter of the outlet orifice of the spray nozzle, the spraying pressure (namely, the pressure as applied on the aqueous solution or slurry and measured at such back end orifice of the spray nozzle at which the liquid to be atomized is fed into the nozzle), the physical properties, especially the rheological property of the aqueous solution or slurry, and other parameters, which are co-related with each other. Parameters of the details of the operation conditions as employed in the present process may be chosen and decided properly with reference to the dimensions (diameter and height) of the spray-drying tower chamber, the inlet temperature of the drying hot gas, the rate (volume/time) of supply of the drying hot gas, the velocity of the stream of the drying hot gas, the desired particle size of the granule product obtained, and other various factors. In general, the thermal efficiency of the spray-drying tower chamber may be improved as the inlet temperature of the drying hot gas supplied is higher and the outlet temperature of the leaving gas withdrawn is lower. However, in case the material to be spray-dried contains a thermally unstable compound, the inlet temperature of the drying hot gas supplied must be lowered to such temperatures at which the thermal decomposition cannot take place. The outlet temperature of the leaving gas withdrawn from the tower chamber varies depending on the quantity of heat which has been losen by the evaporation of the water content during the spray-drying process. Thus, the outlet temperature of the leaving gas withdrawn can be reduced when the total amount of the water as evaporated off from the liquid droplets is increased, namely when the rate of spraying the aqueous solution or slurry out from the spray nozzle per unit time is increased. According to our extensive researches, it has been found that a combination of the inlet temperature of the drying hot gas in the range of I50-300° C and the outlet temperature of the leaving gas in the range of 60-I20° C is able to give most favorable outcomes. The velocity of the upwards-flowing stream of the drying hot gas in the middle part of the tower chamber may suitably be in a range of 0.3m/sec. to 2m/sec. in the upward direction, but optimal value of the upwards-directed velocity of the drying hot gas stream is readily decidable through preliminary tests for particular cases.

In the process of this invention, it is necessary that the residence time of the atomized liquid droplets

and the dried granular particles falling down and floating within the upwards-flowing stream of the drying hot gas passing and ascending through the tower chamber is adjusted to such a value of total residence time which will enable that the granular particles, while being spray-dried, arrive at the bed or layer of the dried granular product accumulated on and above the bottom of the tower chamber only after they have been dried completely and become non-sticky.

The process of this invention can advantageously be operated in a continuous manner and is highly efficient in producing the dried granular product from the concentrated aqueous solution or aqueous slurry of the agricultural chemical compound in a commercial scale. The granule-shaped composition of the agricultural chemical compound as produced by the process of this invention is in the form of granules having an average particle size of 0.2 mm to 1.2 mm. and having no or little tendency to drift in air.

The granule-shaped composition of the agricultural chemical compound as produced by the process of this invention shows good free-flowing property, high storage stability, no or little tendency to drift, excellent solubility in water, excellent wettability and excellent collapsibility to disperse into water. Therefore, the granule-shaped composition of the agricultural chemical compound as produced according to this invention is well suited for use as wettable powder or water-soluble granules in practice. In contrast, when the concentrated aqueous solution or aqueous slurry containing the agricultural chemical compound and a high proportion of the anionic surface-active agent therein is spray-dried not in accordance with this invention by passage of the atomized liquid droplets in a co-current flow direction to the drying hot gas in the spray-drying tower chamber as employed in this invention, the dried granular product having the satisfactory properties cannot be obtained.

This invention is now illustrated with reference to the following Examples and Tests.

[A] At first, the illustrative formulations of the concentrated aqueous solution or aqueous slurry containing an agricultural chemical compound to be spray-dried are described below.

Formulation Example I of Slurry

A uniform slurry was prepared by mixing the following components:-

| | |
|---|---|
| 3-(3,4-dichlorophenyl)-1,1-dimethylurea | 40 parts by weight |
| Sodium laurylphosphate | 30 " " |
| Sodium ligninsulfonate | 2 " " |
| Clay | 28 " " |

with I00 parts by weight of water, and agitating well the resulting mixture to effect the dissolution and dispersion of the components in water.

Formulation Example 2 of Slurry

A slurry (substantially in the state of an aqueous solution) was prepared by dissolving the following components:

| | |
|---|---|
| N-(phosphonomethyl)glycine isopropylamine salt | 30 parts by weight |
| Sodium polyoxyethylene (4) laurylsulfate | 30 " " |
| Sodium sulfate decahydrate | 40 " " |

in 80 parts by weight of water.

Formulation Example 3 of Slurry

A slurry (substantially in the state of an aqueous solution) was prepared by dissolving the following components:

| | |
|---|---|
| 1,1'-dimethyl-4,4'-dipyridinium dichloride ("paraquat") | 30 parts by weight |
| Sodium polyoxyethylene (10) lauryl phosphate | 30 " " |
| Sodium sulfate decahydrate | 40 " " |

in 70 parts by weight of water.

Formulation Example 4 of Slurry

A slurry was prepared by dissolving the following components:

| | |
|---|---|
| 2-chloroethylphosphonic acid | 20 parts by weight |
| Sodium dodecylbenzene sulfonate | 40 " " |
| Sodium sulfate decahydrate | 40 " " |

in 50 parts by weight of water.

Formulation Example 5 of Slurry

A uniform slurry was prepared by mixing the following components:

| | |
|---|---|
| L-2-amino-4-[(hydroxy)(methyl) phosphinoyl]butyryl-L-alanyl-L-alanine sodium salt | 20 parts by weight |
| Sodium laurylsulfate | 20 " " |
| Polyoxyethylene(10) lauryl ether | 20 " " |
| Ammonium sulfate | 40 " " |

with 100 parts by weight of water and dissolving the components in water.

Formulation Example 6 of Slurry

A slurry was prepared by dissolving the following components:

| | | | |
|---|---|---|---|
| Zinc ethylene bis-dithiocarbamate | 50 | parts | by weight |
| Sodium di-octylsulfosuccinate | 30 | " | " |
| A polymer (molecular weight: 20,000) of sodium styrene-sulfonate | 2 | " | " |
| Bentonite | 18 | " | " |

in 70 parts by weight of water.

Formulation Example 7 of Slurry

A slurry was prepared by dissolving the following components:

| | | | |
|---|---|---|---|
| Sumithion | 20 | parts | by weight |
| Potassium oleate | 20 | " | " |
| Polyoxyethylene(20) oleyl ether | 10 | " | " |

| | | | |
|---|---|---|---|
| Clay | 47 | parts | by weight |
| A copolymer (molecular weight: 30,000) of sodium styrene-sulfonate and styrene (1:1) | 3 | " | " |

in 120 parts by weight of water.

Formulation Example 8 of Slurry

A slurry was prepared by dissolving the following components:

| | | | |
|---|---|---|---|
| L-2-amino-4-[(hydroxy)(methyl) phosphinoyl]-butyryl-L-alanyl-L-alanine sodium salt | 12 | parts | by weight |
| DCMU | 18 | " | " |
| Sodium polyoxyethylene(3) octylphenyl ether sulfate | 25 | " | " |
| Sodium alkylnaphthalenesulfonates | 1 | " | " |
| Sodium sulfate decahydrate | 44 | " | " |

in 90 parts by weight of water.

Formulation Example 9 of Slurry

A slurry was prepared by dissolving the following components:

| | |
|---|---|
| Ammonium DL-homo-alanine-4-yl(methyl)phosphinate | 18.5 parts by weight |
| Ammonium polyoxyethylene(10) nonylphenylether sulfate | 25.0 " " |
| Sodium sulfate decahydrate | 56.5 " " |

in 100 parts by weight of water.

Formulation Example 10 of Slurry

A slurry was prepared by dissolving the following components:

| | |
|---|---|
| Ammonium L-homo-alanine-4-yl (methyl)phosphinate (a herbicidal compound of the formula: $CH_3-P(=O)-CH_2-CH_2-C-COOH$) with $OH\cdot NH_3$ on P and $NH_2$ on C | 9.5 parts by weight |
| Ammonium polyoxyethylene(10) nonylphenyl ether sulfate | 25.0 " " |
| Sodium sulfate decahydrate | 65.5 " " |

Comparative Formulation Example 1 of Slurry

A uniform slurry was prepared by mixing the following components:

| | |
|---|---|
| 3-(3,4-dichlorophenyl)-1,1-dimethylurea | 40 parts by weight |
| Sodium ligninsulfonate (as dispersing agent) | 2 " " |
| Clay | 58 " " |

with 100 parts by weight of water and agitating the resulting mixture to effect the dispersion or dissolution of the components in water.

The "comparative" slurry obtained did not contain the anionic surface-active agent (not in accordance with this invention).

Comparative Formulation Example 2 of Slurry

A slurry was prepared by dissolving the following components:

| | |
|---|---|
| 1,1'-dimethyl-4,4'-dipyridium dichloride ("paraquat") | 30 parts by weight |
| Sodium sulfate decahydrate | 70 " " |

in 70 parts by weight of water.

This "comparative" slurry so obtained did not contain any surface-active agent (not in accordance with this invention).

[B] The slurries of different formulations prepared according to the procedures of Item [A] above were each spray-dried to produce the granular composition of the agricultural chemical compound.

The experiments of spray-drying these slurries were conducted in a spray-drying tower chamber (with a height of l6 m and an inner diameter of 4.5 m) fitted with a spray nozzle arranged in the upper part of the tower chamber, by spraying the slurry downwards through the spray nozzle to atomize the slurry. In some experiments, the spray-drying step of the slurries was effected according to the counter-current flow spray-drying method where the drying hot air was fed from the inlets for the air provided in the lower part of the tower chamber to form a continuous, upwards-flowing stream of hot air. While, in another experiments, the spray-drying step of the slurries was effected according to the co-current flow spray-drying method where the drying hot air was fed from the inlets for the air provided in the upper part of the tower chamber to form a continuous, downwards-flowing stream of hot air in the co-current direction, namely in the same sense as the direction in which the slurry was sprayed out downwards from the spray nozzle. In all these experiments, the values of the spraying pressure measured at the back end orifice of the spray nozzle, the inner diameter of the outlet orifice of the spray nozzle, the inlet temperature of the drying hot air supplied, and the outlet temperature of the exhaust air withdrawn from the tower were changed case-by-case so as to fall within the their respective ranges as numerically stipulated in accordance with this invention or to go beyond their respective ranges as numerically stipulated by this invention. Besides, the spray-drying technique employed was also changed from the counter-current flow spray-drying method to the co-current flow spray-drying method, or vice versa, as indicated below in the following Test Examples and Comparative Test Examples of operation of the spray-drying process.

Operation Test Example 1 (within the scope of this invention)

The test was made according to the counter-current flow spray-drying method with a spraying pressure of 981 kPa (10 Kg/cm$^2$), a spray nozzle outlet orifice diameter of 1.6 mm, an inlet temperature of the drying hot air of 200 °C, and an outlet temperature of the withdrawn exhaust gas of 80 °C.

Operation Test Example 2 (within the scope of this invention)

The test was made according to the counter-current flow spray-drying method with a spraying pressure of 9810 kPa (100 Kg/cm$^2$) a spray nozzle outlet orifice diameter of 2.8 mm, an inlet temperature of the drying hot air of 280 °C and an outlet temperature of the withdrawn exhaust gas of 120 °C.

Comparative Operation Test Example 1 (outside the scope of this invention)

The test was made according to the counter-current flow spray-drying method with a spraying pressure of 9810 kPa (100 Kg/cm$^2$), a spray nozzle outlet orifice diameter of 0.2 mm (not in accordance with this invention), an inlet temperature of the drying hot air of 140 °C (not in accordance with this invention), and an outlet temperature of the withdrawn exhaust gas of 50 °C (not in accordance with this invention).

Comparative Operation Test Example 2 (outside the scope of this invention)

The test was made according to the counter-current flow spray-drying method with a spraying pressure of 98 kPa (10 Kg/cm$^2$), a spray nozzle outlet orifice diameter of 4.2 mm (not in accordance with this invention), an inlet temperature of the drying hot air of 280 °C, and an outlet temperature of the withdrawn exhaust gas of 150 °C (not in accordance with this invention).

Comparative Operation Test Example 3 (outside the scope of this invention)

The test was made according to the co-current flow spray-drying method (not in accordance with this invention) with a spraying pressure of 1470 kPa (15 Kg/cm²), a spray nozzle outlet orifice diameter of 1.2 mm, an inlet temperature of the drying hot air of 220° C, and an outlet temperature of the withdrawn exhaust gas of 100° C.

Comparative Operation Test Example 4 (outside the scope of this invention)

The test was done according to the co-current flow spray-drying method (not in accordance with this invention) with a spraying pressure of 9810 kPa (100 Kg/cm²), a spray nozzle outlet orifice diameter of 3.0 mm, an inlet temperature of the drying hot air of 280° C and an outlet temperature of the withdrawn exhaust gas of 110° C.

Comparative Operation Test Example 5 (outside the scope of this invention)

The test was done according to the co-current flow spray-drying method (not in accordance with this invention) with a spraying pressure of 98 kPa (1 Kg/cm²), a spray nozzle outlet orifice diameter of 0.3 mm, an inlet temperature of the drying hot air of 100° C and an outlet temperature of the withdrawn exhaust gas of 50° C.

[C] The undermentioned properties of the granular formulations of the agricultural chemical compound as produced in the above Operation Test Examples were examined and evaluated by the following Test Procedures No. I to No. 4.

Test Procedure No. I (for evaluation of wettability)

A 0.5 g portion of the particulate or granular formulation of the agricultural chemical compound as produced in the above Operation Test Examples was dropped from a height of l0 cm into a pool of l00 ml of a hard water (with a hardness of 3° ) at 20° C which had been placed in a wide-mouthed flask of 300 ml-capacity. The wettability of the granules was evaluated in term of the determined time (in seconds) lapsed between the arrival of the granules at the water level and the sinking of the granules below the water level of the pool.

Test Procedure No. 2 (for evaluation of collapsibility)

A 0.5 g portion of the particulate or granular formulation of the agricultural chemical compound as produced was charged into a capped cylindrical flask containing l00 ml of water (with a hardness of 3°; at 20° C). The flask was then repeatedly inverted upside-down until the granules had been dispersed or dissolved in the water phase. The collapsibility of the granules was evaluated in term of the measured number of times or the frequency of repeated inversion of the flask as required for complete dissolution or dispersion of the granules.

Evaluation Index

- A: Granules collapsed or disintegrated and were dispersed and dissolved in water immediately after the granules were charged into the flask.
- B: Granules collapsed or disintegrated and were dispersed and dissolved in water before five or less times of the inversion of the flask after the granules were charged into the flask.
- C: Granules collapsed or disintegrated and were dispersed and dissolved in water before ten or less times of the invention of the flask after the charging of granules.
- D: Granules collapsed or disintegrated and were dispersed and dissolved in water after more than ten times of the inversion of the flask after the charging of the granules.

Test Procedure No. 3(for evaluation of the distribution of particle size)

The particulate or granular formulations of the agricultural chemical compound as produced were analyzed by an automatic analyzer of determining the particle size distribution of granules, to assess the distribution of the particle size of the granules.

Assessment Index

A: At least 70% of the granules showed a particle size of l50 µm or larger.
B: A portion of 69 to 50% of the granules showed a particle size of l50 µm or larger.
C: A portion of 49 to 30% of the granules showed a particle size of l50 µm or larger.
D: A portion of 29 to l0% of the granules showed a particle size of l50 µm or larger.
E: A portion of 9% or less of the granules showed a particle size of l50 µm or larger.

Test Procedure No. 4 (for evaluation of driftness)

Index of driftness of the granular formulations as produced was evaluated by the following procedure. Thus, a standard test machine of scattering powder was used so that l0 g portion of the particulate or granular formulations as produced was scattered downwards into a box of l $m^3$ in size through a scattering pipe which is provided in said box. Five minutes later, such a volume of air containing dust particles which were still drifting and floating at the position of 40 cm distant from and above said scattering pipe was sucked at a speed of 30 litres/minutes for l minute into a suction pipe (with an inner diameter of 27 mm and a height of 20 cm) containing 75 ml of water therein, so that the dust particles were collected together and caught by the water layer in the suction pipe. Then, the percentage of light transmission at a wave length of 6l0 nm of the water layer containing the dust particles collected was measured. The calculated value of an equation (l00 - the measured percentage of light transmission) was taken as the index of driftness. The less this calculate value, it means that the amount of the drifting dust is less, namely the driftness is favorably low.

[D] The results of the above tests are summarized in the following Tables.

Table 1-1

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| According to this invention | | | | | | |
| Example 1 | Operation Test Example 1 (counter-current flow) | Formulation Example 1 | 5 | A | A | 5 |
| Example 2 | " | " 2 | 3 | A | A | 6 |
| Example 3 | " | " 3 | 5 | A | A | 5 |
| Example 4 | " | " 4 | 6 | A | A | 5 |
| Example 5 | " | " 5 | 2 | A | A | 10 |
| Example 6 | " | " 6 | 5 | A | A | 5 |
| Example 7 | " | " 7 | 3 | A | A | 7 |
| Example 8 | " | " 8 | 6 | A | A | 6 |
| Example 9 | " | " 9 | 7 | A | A | 8 |
| Example 10 | " | " 10 | 5 | A | A | 8 |
| Comparative Example 1 | Operation Test Example 1 (counter-current flow) | Comparative Formulation Example 1 | 140 | D | D | 35 |
| Comparative Example 2 | " | " 2 | 260 | D | D | 38 |

Cont'd...

Table 1-1 (Cont'd)

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| According to this invention | | | | | | |
| Example 11 | Operation Test Example 2 (counter-current flow) | Formulation Example 1 | 9 | A | A | 7 |
| Example 12 | " | " 2 | 10 | A | A | 8 |
| Example 13 | " | " 3 | 8 | A | A | 7 |
| Example 14 | " | " 4 | 10 | A | A | 9 |
| Example 15 | " | " 5 | 12 | A | A | 10 |
| Example 16 | " | " 6 | 10 | A | A | 10 |
| Example 17 | " | " 7 | 5 | A | A | 5 |
| Example 18 | " | " 8 | 11 | A | A | 6 |
| Example 19 | " | " 9 | 13 | A | A | 8 |
| Example 20 | " | " 10 | 12 | A | A | 10 |
| Comparative Example 3 | Operation Test Example 2 (counter-current flow) | Comparative Formulation Example 1 | 360 | D | E | 35 |
| Comparative Example 4 | " | " 2 | 240 | D | E | 39 |

Table 1-2

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| Comparative Example 5 | Comparative Operation Test Example 3 (co-current flow) | Formulation Example 1 | 10 | A | C | 24 |
| Comparative Example 6 | " | " 2 | 8 | A | C | 26 |
| Comparative Example 7 | " | " 3 | 9 | A | C | 30 |
| Comparative Example 8 | " | " 4 | 7 | A | C | 30 |
| Comparative Example 9 | " | " 5 | 10 | A | C | 20 |
| Comparative Example 10 | " | " 6 | 10 | A | C | 18 |
| Comparative Example 11 | " | " 7 | 10 | A | C | 20 |
| Comparative Example 12 | " | " 8 | 10 | A | C | 19 |
| Comparative Example 13 | " | " 9 | 10 | A | C | 24 |
| Comparative Example 14 | " | " 10 | 10 | A | C | 20 |

Cont'd...

Table 1-2 (Cont'd)

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| Comparative Example 15 | Comparative Operation Test Example 3 (co-current flow) | Comparative Formulation Example 1 | 150 | D | E | 70 |
| Comparative Example 16 | " | " 2 | 290 | D | E | 64 |
| Comparative Example 17 | Comparative Operation Test Example 4 (co-current flow) | Formulation Example 1 | 15 | A | D | 26 |
| Comparative Example 18 | " | " 2 | 14 | A | D | 27 |
| Comparative Example 19 | " | " 3 | 10 | A | D | 32 |
| Comparative Example 20 | " | " 4 | 11 | A | D | 32 |
| Comparative Example 21 | " | " 5 | 10 | A | D | 25 |
| Comparative Example 22 | " | " 6 | 12 | A | D | 22 |
| Comparative Example 23 | " | " 7 | 15 | A | D | 24 |

Cont'd...

Table 1-2 (Cont'd)

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| Comparative Example 24 | " | " 8 | 15 | A | D | 29 |
| Comparative Example 25 | " | " 9 | 15 | A | D | 27 |
| Comparative Example 26 | " | " 10 | 10 | A | D | 25 |
| Comparative Example 27 | Comparative Operation Test Example 4 (co-current flow) | Comparative Formulation Example 1 | 380 | D | E | 58 |
| Comparative Example 28 | " | " 2 | 220 | D | E | 55 |

Table 1-3

| Experiments | Spray-drying process as employed | Slurry as spray-dried | Test procedure No. 1 (Wettability) (seconds) | Test Procedure No.2(Collapsibility)(Index for inversion frequency) | Test Procedure No.3 (Index for particle size distribution) | Test Procedure No.4 (Index for driftness) |
|---|---|---|---|---|---|---|
| Comparative Example 29 | Comparative Operation Test Example 1 (counter-current flow) | Formulation Example 1 | 12 | B | D | 20 |
| Comparative Example 30 | " | " 2 | 8 | B | C | 28 |
| Comparative Example 31 | " | " 3 | 10 | B | C | 30 |
| Comparative Example 32 | " | " 4 | 12 | B | D | 20 |
| Comparative Example 33 | " | " 5 | 6 | B | C | 24 |
| Comparative Example 34 | " | " 6 | 12 | B | D | 26 |
| Comparative Example 35 | " | " 7 | 8 | B | C | 30 |
| Comparative Example 36 | " | " 8 | 10 | B | C | 28 |
| Comparative Example 37 | " | " 9 | 10 | B | C | 34 |
| Comparative Example 38 | " | " 10 | 6 | B | C | 20 |

Cont'd...

Table 1-3 (Cont'd)

| Experiments | Spray-drying process as employed | Slurry as spray-dried | Test procedure No. 1 (Wettability) (seconds) | Test Procedure No.2 (Collapsibility) (Index for inversion frequency) | Test Procedure No.3 (Index for particle size distribution) | Test Procedure No.4 (Index for driftness) |
|---|---|---|---|---|---|---|
| Comparative Example 39 | Comparative Operation Test Example 2 (counter-current flow) | Comparative Formulation Example 1 | 140 | D | D | 40 |
| Comparative Example 40 | " | " 2 | 255 | D | D | 45 |
| Comparative Example 41 | Comparative Operation Test Example 2 (counter-current flow) | Formulation Example 1 | 10 | C | A* | 0 |
| Comparative Example 42 | " | " 2 | 12 | C | A* | 0 |
| Comparative Example 43 | " | " 3 | 9 | C | A* | 0 |
| Comparative Example 44 | " | " 4 | 12 | C | A* | 0 |
| Comparative Example 45 | " | " 5 | 12 | C | A* | 0 |
| Comparative Example 46 | " | " 6 | 12 | C | A* | 0 |

Cont'd...

Table 1-3 (Cont'd)

| Experiments | Spray-drying process as employed | Slurry as spray-dried | Test procedure No. 1 (Wettability) (seconds) | Test Procedure No.2(Collapsibility)(Index for inversion frequency) | Test Procedure No.3 (Index for particle size distribution) | Test Procedure No.4 (Index for driftness) |
|---|---|---|---|---|---|---|
| Comparative Example 47 | " | " 7 | 7 | C | A* | 0 |
| Comparative Example 48 | " | " 8 | 10 | C | A* | 0 |
| Comparative Example 49 | " | " 9 | 12 | C | A* | 0 |
| Comparative Example 50 | " | " 10 | 12 | C | A* | 0 |
| Comparative Example 51 | Comparative Operation Test Example 2 (counter-current flow) | Comparative Formulation Example 1 | 360 | D | A* | 0 |
| Comparative Example 52 | " | " 2 | 245 | D | A* | 0 |

Table 1-4

| Experiments | Spray-drying process as employed | Slurry as spray-dried | Test procedure No. 1 (Wettability) (seconds) | Test Procedure No.2(Collapsibility)(Index for inversion frequency) | Test Procedure No.3 (Index for particle size distribution) | Test Procedure No.4 (Index for driftness) |
|---|---|---|---|---|---|---|
| Comparative Example 53 | Comparative Operation Test Example 5 (co-current flow) | Formulation Example 1 | 16 | C | D | 30 |
| Comparative Example 54 | " | " 2 | 15 | C | D | 35 |
| Comparative Example 55 | " | " 3 | 11 | C | D | 32 |
| Comparative Example 56 | " | " 4 | 12 | C | D | 32 |
| Comparative Example 57 | " | " 5 | 15 | C | D | 30 |
| Comparative Example 58 | " | " 6 | 15 | C | D | 34 |
| Comparative Example 59 | " | " 7 | 20 | C | D | 30 |
| Comparative Example 60 | " | " 8 | 20 | C | D | 34 |
| Comparative Example 61 | " | " 9 | 22 | C | D | 38 |
| Comparative Example 62 | " | " 10 | 15 | C | D | 30 |

Cont'd...

Table 1-4 (Cont'd)

| Experiments | Spray-drying process as employed | Slurry as spray-dried | Test procedure No. 1 (Wettability) (seconds) | Test Procedure No.2(Collapsibility)(Index for inversion frequency) | Test Procedure No.3 (Index for particle size distribution) | Test Procedure No.4 (Index for driftness) |
|---|---|---|---|---|---|---|
| Comparative Example 63 | Comparative Operation Test Example 5 (co-current flow) | Comparative Formulation Example 1 | 380 | D | E | 60 |
| Comparative Example 64 | " | " 2 | 225 | D | E | 57 |

With reference to Tables I-3 above, the symbol "A*" (that is, the symbol A with asterisk *) as given in the column of the Test Procedure No. 3 (Index for particle size distribution) means that all the granular samples obtained by the tested spray-drying process were not in the form of particles having the satisfactory properties suitable as a wettable powder or water-soluble granules to be applied in practice, but all of them were in the form of coarse and sticky particles containing a pasty and non-dried core in the

interior of each particle.

## Claims

1. A process for the production of a granule-shaped composition including an agricultural chemical compound comprising drying in a reactor a concentrated aqueous solution or an aqueous slurry, including the agricultural chemical compound as an active ingredient, at least one anionic surface-active agent and, optionally, one or more additives depending on the form or type of composition to be produced, the height ratio of agricultural chemical compound to anionic surface-active agent being in the range 1:0.5 to 1:20, the anionic surface-active agent being a sulphate type, sulphonate type, phosphate type or a carboxylic acid type, the drying being effected by spraying into an upper part or top of the reactor at a pressure of between 490 kPa (5 kg/cm$^2$) and 24500 kPa (250 kg/cm$^2$) the concentrated aqueous solution or aqueous slurry through spraying means having an outlet orifice with a diameter in the range of 0.5 mm to 4.0 mm into an upward and continuously-flowing gas stream whose temperature at its inlet is in the range 150° C to 300° C the gas stream being continuously withdrawn from the upper part or top of the reactor and, by controlling the rate of supply of gas and the rate of spraying of solution or slurry the gas temperature is in the range 60° C to 120° C at its coolest portion, so that dried, non-sticky solid particles are formed having a substantially hollow interior, the particles comprising the agricultural chemical compound, at least one of the anionic surface-active agents and, optionally, one or more additives, and said particles are removed from the reactor.

2. A process as claimed in claim 1 wherein the agricultural chemical compound has a biological activity useful as an insecticide, fungicide, bacteriocide, herbicide, acaricide, plant growth regulator, insect attractant and/or seed disinfectant.

3. A process as claimed in claim 1 or 2 wherein the surface-active agent is an alkyl sulphate, a polyoxyalkylene alkyl ether sulphate, an alkyl phosphate or a polyoxyalkylene alkyl phosphate.

4. A process as claimed in any one of claims 1, 2 or 3 wherein the additive includes a water-soluble extender and/or a finally divided water-insoluble solid vehicle.

5. A process as claimed in any one of claims 1, 2 or 3 wherein the additive includes a dispersing agent and/or a nonionic surface-active agent.

6. A process as claimed in any one of claims 1, to 4 wherein the agricultural chemical compound is at a concentration of between 10% and 60% by weight, the anionic surface-active agent is at a concentration of between 5% and 60% by weight and the additive is at a concentration of between 2% and 60% by weight and the total concentration of the agricultural chemical compound, anionic surface-active agent and additive is between 10% and 80% by weight.

7. A process as claimed in any one of the previous claims wherein the particles produced by the process are substantially spherical granules having an average size of between 0.2 mm and 1.2 mm.

8. A process as claimed in any one of the preceding claims wherein the reactor is a tower chamber.

9. A process as claimed in claim 9 wherein the tower chamber is fitted with inlets positioned in a lower part of the tower chamber for supply of said gas stream and fitted with an outlet for removal of the dried particles.

## Revendications

1. Un procédé pour la production d'une composition sous forme de granulés, contenant un composé chimique à usage agricole, comprenant l'évaporation à sec, dans un réacteur, d'une solution aqueuse concentrée ou d'une bouillie aqueuse contenant un composé chimique à usage agricole comme ingrédient actif, au moins un agent surfactif anionique et, éventuellement, un ou plusieurs additifs selon la forme ou le type de composition devant être produit, le rapport pondéral entre le composé à usage chimique agricole et l'agent surfactif anionique étant compris entre 1:0,5 à 1:20, l'agent surfactif anionique étant du type sulfate, sulfonate, phosphate ou acide carboxylique, l'évaporation à sec étant

obtenue en pulvérisant, dans la partie supérieure ou au sommet du réacteur, sous une pression comprise entre 490 kPa (5 kg/cm$^2$) et 24 500 kPa (250 kg/cm$^2$) la solution aqueuse concentrée ou la bouillie aqueuse à travers des moyens de diffusion dont l'orifice de sortie présente un diamètre compris entre 0,5 mm et 4,00 mm, dans un flux ascendant continu (courant gazeux) et dont la température, au niveau de l'orifice de sortie, est comprise entre 150° C et 300° C, le flux de gaz étant évacué continuellement de la partie supérieure ou du sommet du réacteur et, en contrôlant le débit d'alimentation en gaz et le débit de pulvérisation de la solution ou de la bouillie, de telle sorte que la température du gaz soit comprise entre 60° C et 120° C dans sa partie la plus froide, et que soient formées des particules sèches solides n'ayant pas tendance à coller, dont l'intérieur soit substantiellement creux, les dites particules contenant le composé chimique à usage agricole, au moins un des agents surfactifs anioniques et, éventuellement, un ou plusieurs additifs, les particules ainsi obtenues étant alors retirées du réacteur.

2. Un procédé tel que revendiqué dans la revendication 1 dans lequel le composé chimique à usage agricole présente une activité biologique utile en tant qu'insecticide, fongicide, bactéricide, herbicide, acaricide, régulateur de croissance des plantes, moyen pour attirer les insectes et/ou désinfectant de semences.

3. Un procédé tel que revendiqué dans l'une des revendications 1 ou 2 dans lequel l'agent surfactif est un alcoyl sulfate, un polyoxyalcoylène alcoyl ether sulfate, un alcoyl phosphate ou un polyoxyalcoylène alcoyl phosphate.

4. Un procédé tel que revendiqué dans l'une des revendications 1, 2 ou 3 dans lequel l'additif comprend un diluant soluble dans l'eau et/ou un excipient solide finement divisé insoluble dans l'eau.

5. Un procédé tel que revendiqué dans l'une des revendications 1, 2 ou 3 dans lequel l'additif contient un agent dispersant et/ou un agent non-ionique surfactif.

6. Un procédé tel que revendiqué dans l'une des revendications 1 à 4 dans lequel le composé chimique à usage agricole est à une concentration pondérale comprise entre 10 % et 60 %, l'agent surfactif anionique est à une concentration comprise entre 5 % et 60 % et la concentration pondérale totale de l'ensemble composé agricole chimique, agent surfactif anionique et additif est comprise entre 10 % et 80 %.

7. Un procédé tel que revendiqué dans l'une des revendications précédentes dans lequel les particules fabriquées par le procédé sont des granulés de forme substantiellement sphèrique ayant une taille moyenne comprise entre 0.2 mm et 1.2 mm.

8. Un procédé tel que revendiqué dans l'une des revendications précédentes dans lequel le réacteur utilisé est une chambre en forme de tour.

9. Un procédé tel que revendiqué dans la revendication 8 dans lequel le réacteur est muni d'orifices d'entrée disposés dans la partie basse du réacteur pour l'admission dudit courant gazeux et d'un orifice de sortie pour l'évacuation des particules sèches.

**Ansprüche**

1. Verfahren zur Herstellung einer granulatförmigen, eine landwirtschaftlich verwendbare chemische-Verbindung enthaltenden Zusammensetzung, bei dem in einem Reaktor eine konzentrierte wässrige Lösung oder ein wässriger Brei getrocknet wird, der die landwirtschaftlich verwendbare chemische Verbindung als einen aktiven Bestandteil, zumindest einen anionischen oberflächenaktiven Wirkstoff und gegebenenfalls, abhängig von der Form oder der Art der herzustellenden Zusammensetzung, einen oder mehrere Additive enthält, wobei das Gewichtsverhältnis der landwirtschaftlich verwendbaren chemischen Verbindung zu dem anionischen oberflächenaktiven Wirkstoff im Bereich zwischen 1:0,5 bis 1:20 liegt, bei dem der anionische oberflächenaktive Wirkstoff eine Sulfatverbindung, eine Sulfonatverbindung, eine Phosphatverbindung oder eine Carbonsäureverbindung ist, bei dem das Trocknen bewirkt wird, indem die konzentrierte wässrige Lösung oder der wässrige Brei in einen oberen oder den obersten Teil des Reaktors mit einem Druck zwischen 490 kPa (5 kg/cm$^2$) und 24500 kPa (250

kg/cm²) mit Hilfe von Sprüheinrichtungen, die eine Auslaßöffnung mit einem Durchmesser im Bereich zwischen 0,5 mm und 4 mm aufweisen, in einen aufwärts und ständig strömenden Gasstrom eingesprüht wird, dessen Temperatur an seinem Einlaß im Bereich zwischen 150° C und 300° C liegt, wobei der Gasstrom ständig an dem oberen oder obersten Teil des Reaktors abgezogen wird, und bei dem durch Steuerung der Gaszufuhrrate und der Sprührate der Lösung oder des Breis die Gastemperatur an ihrer kühlsten Stelle im Bereich zwischen 600° C und 120° C liegt, so daß trockene, klebfreie, feste Partikel gebildet werden, die einen im wesentlichen hohlen Innenraum aufweisen, wobei die Partikel die landwirtschaftlich nutzbare chemische Zusammensetzung, zumindest einen der anionischen oberflächenaktiven Wirkstoffe und gegebenenfalls einen oder mehrere Additive enthalten, und bei dem die Partikel aus dem Reaktor entfernt werden.

**2.** Verfahren nach Anspruch 1, bei dem die landwirtschaftlich nutzbare chemische Zusammensetzung eine biologische Wirksamkeit aufweist und als Insektizid, Fungizid, Bakteriozid, Herbizid, Akarizid, Regulator des Pflanzenwachstums, Insektenlockstoff und/oder Saatgutdesinfizierungsmittel dient.

**3.** Verfahren nach Anspruch 1 oder 2, bei dem der oberflächenaktive Wirkstoff ein Alkylsulfat, ein Polyoxyalkylenalkyläthersulfat, ein Alkylphosphat oder ein Polyoxyalkylenalkylphosphat ist.

**4.** Verfahren nach einem der Ansprüche 1, 2 oder 3, bei dem das Additiv ein wasserlösliches Streckmittel und/oder ein feinkörniger wasserunlösliches Bindemittel ist.

**5.** Verfahren nach einem der Ansprüche 1, 2 oder 3, bei dem das Additiv ein dispergierender Wirkstoff und/oder ein nichtionischer oberflächenaktiver Wirkstoff ist.

**6.** Verfahren nach einem der Ansprüche 1 bis 4, bei dem die landwirtschaftlich nutzbare chemische Zusammensetzung in einer Konzentration von zwischen 10 Gewichtsprozent und 60 Gewichtsprozent enthalten ist, der anionische oberflächenaktive Wirkstoff mit einer Konzentration zwischen 5 Gewichtsprozent und 60 Gewichtsprozent enthalten ist, das Additiv mit einer Konzentration zwischen 2 Gewichtsprozent und 60 Gewichtsprozent enthalten ist und die Gesamtkonzentration der landwirtschaftlich nutzbaren chemischen Zusammensetzung, des anionischen oberflächenaktiven Wirkstoffs und des Additivs zwischen 10 Gewichtsprozent und 80 Gewichtsprozent liegt.

**7.** Verfahren nach einem der vorhergehenden Ansprüche, bei dem die durch das Verfahren hergestellten Partikel im wesentlichen kugelförmige Granulatkörner sind, mit einer mittleren Größe zwischen 0,2 mm und 1,2 mm.

**8.** Verfahren nach einem der vorhergehenden Ansprüche, bei dem der Reaktor eine turmförmige Kammer ist.

**9.** Verfahren nach Anspruch 9, bei dem die turmförmige Kammer mit Einlässen, die in dem unteren Teil der - turmförmigen Kammer zum Zuführen des Gasstroms angeordnet sind, sowie mit einem Auslaß zum Entfernen der getrockneten Partikel versehen ist.